# EUROPÄISCHE PATENTSCHRIFT

(11) **EP 0 810 271 B1**
(45) Veröffentlichungstag und Bekanntmachung des Hinweises auf die Patenterteilung: **09.07.2003**
(21) Anmeldenummer: 97107856.3
(22) Anmeldetag: 14.05.1997
(51) Int. Cl.: C09C 3/12, C09C 1/28, C08K 9/06, C09C 1/40

(54) **Mischungen, bestehend aus feinteiligem Feldspat und Organosiliciumverbindungen, ihre Herstellung und Verwendung**
Mixtures consisting of finely divided feldspar and organosilicon compounds, their preparation and their use
Mélanges constitués de feldspath finement divisé et de composés organosiliciques, leur préparation et leur utilisation

(30) Priorität: 29.05.1996 DE 19621462
(43) Veröffentlichungstag der Anmeldung: 03.12.1997
(73) Patentinhaber: Degussa AG, 40474 Düsseldorf (DE); Rohstoffhandelsgesellschaft Huppert mbH, 66123 Saarbrücken (DE)
(72) Erfinder: Görl, Udo, Dr., 53332 Bornheim-Roisdorf (DE); Lambertz, Horst, 50354 Hürth (DE); Parkhouse, Alan, 50389 Wesseling (DE)

(56) Entgegenhaltungen:
- EP-A- 0 442 143
- EP-A- 0 506 290
- US-A- 4 151 157
- US-A- 4 210 459
- US-A- 4 218 513
- PATENT ABSTRACTS OF JAPAN vol. 096, no. 006, 28. Juni 1996 -& JP 08 048910 A (ASAHI GLASS CO LTD), 20. Februar 1996

## Beschreibung

Die Erfindung betrifft Mischungen, bestehend aus feinteiligem Feldspat und Organosilicumverbindungen, mit diesen modifizierten Feldspat, die Verwendung in vulkanisierbaren Kautschukmischungen und die daraus hergestellten Vulkanisate.

Aus dem Stand der Technik ist bekannt, daß die Verwendung von natürlichen Füllstoffen in Kombination mit Organosiliciumverbindungen zu einer Verbesserung des gummitechnischen Wertebildes in den entsprechenden vulkanisierten Kautschukmischungen führt.

Zur Modifizierung der Oberfläche löst man Organosiliciumverbindungen in einem organischen Lösungsmittel auf und behandelt mit dieser Lösung anschließend z. B. Clays (US-PS 3,227,665).

Aus der US-PS 3,567,680 ist bekannt, in Wasser suspendierte Kaoline mit Mercapto- und Aminosilanen zu modifizieren. Die verwendeten Organosiliciumverbindungen sind in den für die Modifizierung nötigen Mengen wasserlöslich, so daß die Behandlung des Füllstoffs aus einer Lösung heraus erfolgt. Demgegenüber ist aus der EP-B 0126 871 (= US-PS 4,514,231) ein Verfahren bekannt, bei dem man die Oberfläche natürlicher Füllstoffe silikatischer Natur mit wasserunlöslichen Organosiliciumverbindungen modifiziert, die in Form wässriger Emulsionen vorliegen.

Die Verbesserung der gummitechnischen Werte betrifft natürlich auch die vorliegende Erfindung.

Eine zusätzliche Aufgabe liegt aber darin, vulkanisierbare Mischungen und die dazugehörigen Vulkanisate bereitzustellen, die verbesserte Eigenschaften insbesondere in Bezug auf die Lösungsmittelstandfestigkeit zeigen.

Es wurde nun gefunden, daß man Vulkanisate mit den gewünschten Eigenschaften herstellen kann, wenn man Mischungen, bestehend aus feinteiligem Feldspat und Organosiliciumverbindungen der allgemeinen Formel

[R¹ₙ(RO)₃₋ₙSi-(CH₂)_{z}]_{y} [B] (I)

in der bedeuten:
- B:: -SCN (wenn y =1) oder -Sₓ- (wenn y =2), bevorzugt -SCN,
- R und R¹:: eine Alkylgruppe mit 1 - 8 C-Atomen, verzweigt oder unverzweigt,
- n:: 0, 1 oder 2,
- z:: eine ganze Zahl von 1 bis 8, bevorzugt 1 oder 2
- x:: eine Zahl von 1 bis 8
einsetzt.

Die Organosiliziumverbindungen gemäß der allgemeinen Formel (I) werden im allgemeinen in einer Menge von 0,1 bis 10 Gew.-Teilen, insbesondere 0,3 bis 5 Gew.-Teilen pro 100 Teile Feldspat ohne Zusatz von Lösungsmitteln eingesetzt.

Während des Mischvorgangs, bei dem man die Organosilicumverbindungen bevorzugt auf den Füllstoff aufsprüht, hält man im allgemeinen eine Temperatur <80 ° C ein, während die Umsetzung der homogenisierten Mischung bevorzugt im Temperierbett bei einer Temperatur von 80 bis 160 ° C, bevorzugt 90 bis 140 ° C erfolgt. Die Verweilzeit während dieser Hydrophobierungsreaktion beläuft sich im allgemeinen auf 3 min bis 2,5 h.
Als für die homogene Durchmischung geeigneten Intensivmischer wählt man beispielsweise eine Pflugscharmischer, dessen Drehzahl man so reguliert, daß bei intensiver Durchmischung in dem zu mischenden Material die Temperatur von 80 ° C nicht überschritten wird.
In der Regel werden in der Kautschuktechnologie aus der Gruppe der natürlichen Füllstoffe Clays bevorzugt eingesetzt, da sie nach der allgemeinen Auffassung aufgrund ihrer relativ großen Oberfläche auch eine verstärkende Wirkung im Vulkanisat zeigen.
Der verwendete, sich als überlegen zeigende Feldspat besitzt nach dem Vermahlen eine spez. Oberfläche von 4 bis 8 m²/g (BET ISO 5794/1D) insbesondere ca. 7 m²/g und eine Teilchengrößenverteilung von 70 bis 95 % <90 µ, bevorzugt ca. 95 %. Im Vergleich dazu haben Clays eine spez. Oberfläche von mindestens 10 bis 20 m²/g.

Erfindungsgemäß setzt man insbesondere Kalifeldspat ein. Die hergestellten Mischungen aus Feldspat und Organosiliciumverbindungen erweisen sich, auch wenn noch keine Umsetzung zwischen der Feldspatoberfläche und den jeweiligen Organosilicumverbindungen stattgefunden hat, als weniger hygroskopisch im Vergleich zum als Ausgangsrohstoff vorliegenden Feldspat.
Die bevorzugt in modifizierter Form (Anspruch 4) verwendeten Feldspate führen bei ihrem Einsatz zu verbesserten Kautschukmischungen und den zugehörigen Vulkanisaten.
Dabei werden letztere, in denen Verbindungen gemäß Formel (I) ihren Einsatz finden, bevorzugt mit Schwefel und Vulkanisationsbeschleunigern vulkanisiert.

Die Kunststoff- und Kautschukmischungen enthalten den Feldspat in einer Menge von 10bis 300 Gew.-Teilen, bezogen auf 100 Teile Kunststoff oder Kautschuk, bevorzugt bis 200 Gew.-Teile.

Je nach Aufgabenstellung besteht auch die Möglichkeit neben dem modifizierten Feldspat weitere Füllstoffe natürlicher Art, wie z. B. Clays oder Kreiden oder synthetischer Art wie z. B. gefällte Kieselsäuren oder Silikate, wie man sie als Füllstoffe aus dem Kautschukbereich kennt, einzusetzen.

Diese Füllstoffe können ebenso wie die erfindungsgemäß eingesetzten Feldspate durch eine oder mehrere der Verbindungen gemäß Formel (I) modifiziert sein (DE -196 09619.7-41 ).

Die Gesamtmenge der Füllstoffe sollte jedoch 300 Gew.-Teile pro 100 Teile Kunststoff oder Kautschuk nicht übersteigen, wobei der Feldspat mindestens die Hälfte der Gesamtmenge ausmacht.

Als Verstärkungssysteme können die erfindungsgemäßen Vulkanisate auch die in diesem Bereich üblichen Ruße, wie z. B. Furnace-Ruße, Flammruße, Channel-Ruße in einer Menge von > 0 bis 100 Gew.-Teilen enthalten, zusätzlich zu den weißen Füllstoffen.

Die Verwendung der erfindungsgemäßen modifizierten Feldspate umfaßt die nach dem Stand der Technik bekannten Kautschukmischungen auf Basis von ölgestreckten, natürlichen und synthetischen Kautschuken wie Naturkautschuke, Butadienkautschuke, Isoprenkautschuke, Butadien-Styrol-Kautschuke, Acrylnitril-Butadien-Kautschuke, Butylkautschuke, Terpolymere aus Ethylen, Propylen und nicht konjugierte Dien. Besonders bevorzugt wird EPDM eingesetzt. Ferner kommen die folgenden Kautschuke infrage:
Carboxylkautschuke, Epoxidkautschuke, Trans-Polypentenamer, halogenierte Butylkautschuke, Kautschuke aus 2-Chlor-Butadien, Ethylen-Vinylacetat-Copolymere, gegebenenfalls auch chemische Derivate des Naturkautschuks sowie modifizierte Naturkautschuke.
Als weitere Komponenten sind enthalten:
   - ZnO und Stearinsäure als Promotoren der Vulkanisation in Mengen von 0,5 - 10 Teilen je 100 Teile Kautschuk,
   - üblicherweise verwendete Alterungs, Ermüdungs-, Ozonschutzmittel, wie z. B. IPPD, TQM sowie Wachse als Lichtschutzmittel und deren Verschnitte,
   - beliebige Weichmacher, wie z. B. aromatische, naphtenische, paraffinische, synthetische Weichmacher und deren Verschnitte,
   - gegebenenfalls Silane, wie Aminotrialkoxisilane, in einer Menge von 0,1 bis 15 Teilen, bevorzugt 1 bis 10 Teilen je 100 Teilen silanolgruppentragender Füllstoffe wie Kieselsäuren, Silikate, Clays usw.
   - gegebenenfalls Farbstoffe und Verarbeitungshilfsmitteln in der üblichen Dosierung.

Die erfindungsgemäßen Kautschukmischungen werden insbesondere so hergestellt, daß man die Kautkuschukkomponente(n), die erfindungsgemäß modifizierten Felspate, die gegebenenfalls vorhandene Kieselsäure und den gegebenenfalls vorhandenen Ruß sowie gegebenenfalls Weichmacher, Alterungsschutzmittel und Aktivatoren in einem Knetgerät, bevorzugt in einem Banbury-Innenmischer, bei einer Temperatur von 100 bis 200 ° C 3 bis 15 Minuten lang knetet, wobei dieser Mischzeitbereich bei dem angegebenen Mischtemperaturbereich in einer Stufe oder auch mehrstufig durchgeführt werden kann. Anschließend wird zur Vulkanisation ein Beschleuniger und Schwefel oder ein sonstiges Vulkanisationshilfsmittel hinzugefügt und, entweder im Banbury-Innenmischer oder auf einer Mischwalze, bei geeigneten Temperaturen weitere 2 bis 10 Minuten gemischt. Die fertige Kautschukmischung wird anschließend als Kautschukfell oder in Form von Streifen gezogen.

In einer Variante dieses Verfahrens werden die Kautschukkomponente(n), die erfindungsgemäßen Abmischungen, die Kieselsäure und den gegebenenfalls vorhandenen Ruß sowie gegebenenfalls Weichmacher, Alterungsschutzmittel und Aktivatoren auf einer Mischwalze bei einer Temperatur von 50 bis 100 ° C 3 bis 20 Minuten lang knetet, wobei dieser Mischzeitbereich bei dem angegebenen Mischtemperaturbereich in einer Stufe oder auch mehrstufig durchgeführt werden kann. Anschließend wird zur Vulkanisation ein Beschleuniger und Schwefel oder ein sonstiges Vulkanisationshilfsmittel hinzugeführt und, entweder im Banbury-Innenmischer oder auf einer Mischwalze, bei geeigneten Temperaturen weitere 2 bis 10 Minuten gemischt. Die fertige Kautschukmischung wird anschließend wie oben weiterbehandelt.

Die erfindungsgemäß modifizierten Feldspate und die Mischungen können in nahezu allen Gummiartikeln angewandt werden. Sie zeichnen sich besonders in solchen Produkten aus, die einen geringen Druckverformungsrest (Compression Set) und eine hohe Öl-, Vergaserkraftstoff- und Lösungsmittelbeständigkeit aufweisen sollen und führen dort zu einer unerwarteten Verbesserung, wie sie durch den Zusatz vergleichbarer Mengen an Organosiliciumverbindungen zu anderen natürlichen Füllstoffen, wie z. B. Clays nicht gefunden wird.

Insbesondere im Bereich der technischen Gummiartikel existieren verschiedene Einsatzgebiete, bei denen der Besitz dieser Eigenschaften eine entscheidende Rolle spielt. Hierzu gehören beispielsweise Dichtungsprofile und Gummiauflager im Bausektor, öl- und kraftstoffbeständige Schläuche und Formartikel für den Einsatz in der Automobilindustrie, Bezüge von Gummiwalzen für die Druckindustrie oder gummierte Behälterauskleidungen.

### Beispiele

Die folgenden Beispiele erläutern das Herstellungsverfahren und geben einen Einblick in die vorteilhaften Eigenschaften der unter Verwendung der erfindungsgemäß hergestellten modifizierten Feldspate erhaltenen Vulkanisate.

### In den Anwendungsbeispielen werden folgende Chemikalien verwendet:

- Buna Hüls EM 1712 RE: EPDM-Kautschuk mit 37,5 Teilen Weichmacher auf 100 Tle. Kautschuk (Hüls AG)
- Buna SB 1712: SBR, hergestellt nach dem Emulsionsverfahren (Buna AG, Skopau)
- Cumaronharz B1: Cumaron-Indenharz (St. Lawrence Resin Products)
- Kaliorith QU1: Kalifeldspat
- Naftolen ZD: Aromatischer Weichmacher (Chemetal).
- Perbunan N 3807 NS: NBR-Kautschuk mit ca. 39% ACN (Bayer AG)
- Si 69: Bis(triethoxysilylpropyl)tetrasulfan (Degussa AG)
- Si 264: Triethoxisilylpropylthiocyanat (Degussa AG)
- Protector G 35: Ozonschutzwachs (Fuller).
- Vulkacit D: Diphenylguanidin (Bayer AG).
- Vulkacit DM: 2,2' Dibenzothiazyldisulfid (Bayer AG)
- Vulkacit Mercapto: 2 - Mercaptobenzthiazol (Bayer AG)
- Vulkacit CZ: Benzothiazyl-2-cyclohexylsulfenamid (Bayer AG).
- Vulkanol OT: Weichmacher auf Basis Ether-thioether (Bayer AG)
- Vulkanol 88: Methylen-bis-thioglycolsäurebutylester (Bayer AG)
- Vulkanox 4020: Verfärbendes Alterungsschutzmittel auf Basis Phenylendiamin (Bayer AG).
- Vulkanox HS: Verfärbendes Alterungsschutzmittel auf Basis
Dihydrochinolin (Bayer AG)
- Vulkanox MB: Nichtverfärbendes Alterungsschutzmittel auf Benzimidazolbasis (Bayer AG)
- Vulkanox BKF: Nichtverfärbendes Alterungsschutzmittel auf Basis Methylbutylphenol (Bayer AG)

### Beispiel 1: Herstellung von mit Si 69 mod. Kalifeldspat (Kaltmodifizierung)

In einem geeigneten Mischbehälter wird unter starkem Rühren bei Raumtemperatur ein Fließbett aus 4,2 kg Kalifeldspat (0,5 % H₂O) hergestellt. Über eine Einstoffdüse werden 240 g Si 69 zugegeben und der Inhalt unter Rühren bei Raumtemperatur homogenisiert. Die Gesamtmischzeit beträgt 5 Minuten.

Das so erhaltene Kalifeldspat/Si 69-Gemisch wird anschließend über eine Zeitspanne von weiteren 10 Minuten unter ständigem Rühren auf ca. 140 °C aufgeheizt.

Die Analyse der so hergestellten Abmischung zeigt, daß die gesamte Silanmenge an der Oberfläche des Kalifeldspates gebunden ist, da im Extrakt des Materials mittels HPLC kein Silan nachzuweisen ist.

### Beispiel 2: Herstellung von mit Si 264 mod. Kalifeldspat (Warmmodifizierung bei 70°C)

4,2 kg Kalifeldspat (0,5 % H₂O) werden in einem Trockenschrank auf 70°C erwärmt und in einem geeigneten Mischbehälter unter starkem Rühren mit 360 g Si 264, über eine Einstoffdüse zugegeben, versetzt. Der Inhalt wird unter Rühren bei 70°C homogenisiert. Die Gesamtmischzeit beträgt 5 Minuten.

Das so erhaltene Kalifeldspat/Si 264-Gemisch wird anschließend über eine Zeitspanne von weiteren 5 Minuten unter ständigem Rühren auf ca. 140 °C aufgeheizt.

Die Analyse der so hergestellten Abmischung zeigt, daß die gesamte Silanmenge an der Oberfläche des Kalifeldspates gebunden ist, da im Extrakt des Materials mittels HPLC kein Silan nachzuweisen ist.

**In den Beispielen 3 bis 6 verwendete Prüfnormen:**

| | | |
|---|---|---|
| Rheometer: | min. | DIN 53 529 |
| Scorchzeit | min. | ASTM D 2084 |
| Mooney-Viskosität | Mooney Punkte | DIN 53 523/53 524 |
| Zugfestigkeit | MPa | DIN 53 504 |
| Modul 300 % | MPa | DIN 53 504 |
| Modul 500 % | MPa | DIN 53 504 |
| Shore-A-Härte | - | DIN 53 505 |
| DIN-Abrieb | mm³ | DIN 53 516 |
| Druckverformungsrest | % | ASTM D 395 |
| Flexometer-Wärmebildung | °C | ASTM D 623 A |

### Beispiel 3: Modifizierter Kalifeldspat in EPDM

| | | 1 | 2 | 3 | 4 | 5 |
|---|---|---|---|---|---|---|
| Buna Hüls EM 1712 RE | | 137,5 | 137,5 | 137,5 | 137,5 | 137,5 |
| Kaolin | | 150 | 150 | 150 | --- | --- |
| Kreide | | 50 | 50 | 50 | --- | --- |
| Kalifeldspat +0,5 Si 264 | | --- | --- | --- | 201 | --- |
| Kalifeldspat +1 Si 264 | | --- | --- | --- | --- | 202 |
| Si 264 | | --- | 1 | 2 | --- | --- |
| Zinkoxid | | 3 | 3 | 3 | 3 | 3 |
| Stearinsäure | | 2 | 2 | 2 | 2 | 2 |
| Vulkanox HS | | 1 | 1 | 1 | 1 | 1 |
| Vulkacit D | | 0,75 | 0,75 | 0,75 | 0,75 | 0,75 |
| Vulkacit Mercapto | | 1,75 | 1,75 | 1,75 | 1,75 | 1,75 |
| Schwefel | | 3 | 3 | 3 | 3 | 3 |

| Meßgröße: | Einheit: | | | | | |
|---|---|---|---|---|---|---|
| Zugfestigkeit | MPa | 6,3 | 6,1 | 7,1 | 5,1 | 5 |
| Modul 300% | MPa | 3,6 | 5,5 | 5,9 | 3,9 | 4,4 |
| Shore-Härte | Shore A | 65 | 66 | 69 | 68 | 68 |

| Druckverformungsrest | | | | | | |
|---|---|---|---|---|---|---|
| 22h/70°C | % | 44,9 | 22,6 | 23,8 | 13,7 | 13,2 |
| 70h/100°C | % | 74,8 | 51,3 | 50,6 | 40,1 | 38,7 |

Das Beispiel zeigt, daß mit modifiziertem Feldspat in einer typischen EPDM-Rezeptur trotz geringerer Zugfestigkeit im Vergleich zu einem Kaolin/Kreide-Verschnitt das Modul- und Härteniveau eingestellt wird und im Druckverformungsrest Verbesserungen erzielt werden, die auch durch die in situ-Modifizierung (Mischung 2 + 3) des Füllstoffgemischs nicht erreicht werden.

### Beispiel 4: Modifizierter Kalifeldspat in NBR

| | | 1 | 2 | 3 |
|---|---|---|---|---|
| Perbunan N 3807 NS | | 100 | 100 | 100 |
| Kaolin | | 200 | 200 | - - - |
| Kalifeldspat + 0,75 Si | | - - - | - - - | 201,5 |
| 264 | | | | |
| Si 264 | | - - - | 1,5 | - - - |
| Zinkoxid | | 5 | 5 | 5 |
| Stearinsäure | | 2 | 2 | 2 |
| Vulkanox BKF | | 1 | 1 | 1 |
| Vulkanox MB | | 1 | 1 | 1 |
| Vulkanol OT | | 10 | 10 | 10 |
| Vulkanol 88 | | 20 | 20 | 20 |
| Vulkacit CZ | | 1,75 | 1,75 | 1,75 |
| Schwefel | | 1,8 | 1,8 | 1,8 |

| Meßgröße: | Einheit | | | |
|---|---|---|---|---|
| Mooney Scorch MS t₅ | min. | 18,8 | 17 | 19,8 |
| (121°C) | | | | |
| Rheometer t10% (150°C) | min. | 11,4 | 11,4 | 8,6 |
| Zugfestigkeit | MPa | 9,1 | 8,5 | 5,7 |
| Modul 300% | MPa | 5,9 | 7,3 | 4,4 |
| Shore Härte | Shore A | 74 | 76 | 74 |
| Druckverformungsrest | | | | |
| 70h/100°C | % | 74,7 | 69 | 52,3 |

| Werteänderung nach Lagerung in: | Dauer/Temperatur | | | |
|---|---|---|---|---|
| ASTM-Öl Nr.3 | 14d/70°C | | | |
| Zugfestigkeit | % | 15,4 | 36,5 | 17,5 |
| Modul | % | 61,0 | 58,9 | 18,2 |
| ASTM-Öl Nr.1 | 14d/70°C | | | |
| Zugfestigkeit | % | 29,7 | 55,3 | 22,8 |
| Modul | % | 91,5 | 80,8 | 36,4 |
| Methanol | 14d/23°C | | | |
| Zugfestigkeit | % | -39,6 | -17,6 | -8,8 |
| Modul 5 | % | -10,1 | -5,5 | 0 |

Beispiel 4 zeigt auch in NBR einen niedrigeren Druckverformungsrest, zusätzlich eine wesentliche Verbesserung der Lagerfähigkeit von Mischungen mit modifiziertem Kalifeldspat in organischen Medien wie naphthenischem- oder aromatischem Öl und Alkohol. Ein weiterer Vorteil zeigt sich hinsichtlich längerer Scorchzeit bei 121°C und dennoch schnellerer Anvulkanisation der modifizierten Kalifeldspat enthaltenden Mischung.

### Beispiel 5: Modifizierter Kalifeldspat in NR

| | | 1 | 2 | 3 |
|---|---|---|---|---|
| First Latex Crepe | | 100 | 100 | 100 |
| Kaolin | | 75 | 75 | - - - |
| Si 264-modifizierter | | - - - | - - - | 75,55 |
| Kalifeldspat Si 264 | | - - - | 0,55 | - - - |
| Titandioxid | | 10 | 10 | 10 |
| Zinkoxid | | 10 | 10 | 10 |
| Stearinsäure | | 1 | 1 | 1 |
| Vulkacit DM | | 0,75 | 0,75 | 0,75 |
| Vulkacit D | | 1,5 | 1,5 | 1,5 |
| Schwefel | | 2,5 | 2,5 | 2,5 |

| Meßgröße: | Einheit | | | |
|---|---|---|---|---|
| Mooney Scorch MS t5 (121°C) | min. | 31,4 | 31,2 | 33,8 |

| Rheometer 155°C | | | | |
|---|---|---|---|---|
| t10% | min. | 3,8 | 3,8 | 3,7 |
| t120min.-t10% | min. | 10,3 | 10,5 | 10,5 |

| Druckverformungsrest | | | | |
|---|---|---|---|---|
| 22h/70°C | % | 30,3 | 22,7 | 17,9 |

Beispiel 5 zeigt, daß auch in Naturkautschuk neben vergleichbaren Rohmischungsdaten der Druckverformungsrest deutlich niedriger liegt, als es durch Modifizierung von Clay möglich ist.

### Beispiel 6: Modifizierter Kalifeldspat in SBR

| | | 1 | 2 | 3 |
|---|---|---|---|---|
| Buna SB 1712 | | 100 | 100 | 100 |
| Kaolin W | | 150 | 150 | - - - |
| Si 264-modifizierter | | - - | - - - | - 151,1 |
| Kalifeldspat Si 264 | | - - | - 1,1 | - - - |
| Zinkoxid | | 3 | 3 | 3 |
| Stearinsäure | | 2,5 | 2,5 | 2,5 |
| Cumaronharz B1 | | 5 | 5 | 5 |
| Naftolen ZD | | 15 | 15 | 15 |
| Vulkacit CZ | | 1,2 | 1,2 | 1,2 |
| Vulkacit D | | 0,6 | 0,6 | 0,6 |
| Schwefel | | 2 | 2 | 2 |

| Rheometer 145°C | | | | |
|---|---|---|---|---|
| t10% | min. | 32,4 | 33,8 | 31,3 |
| t90-t10% | min. | 28,4 | 32,5 | 20,6 |
| Modul 500% | MPa | 2,3 | 3,5 | 2,1 |

| Druckverformungsrest | | | | |
|---|---|---|---|---|
| 22h/70°C | % | 25,1 | 21,5 | 13,5 |
| 70h/100°C | % | 62,9 | 56,8 | 40,7 |

| Wärmebildung Flexometer | | | | |
|---|---|---|---|---|
| deltaT | °C | 73 | 55 | 42 |
| delta T Center | °C | 110 | 91 | 66 |

Beispiel 6 weist für SBR nach, daß neben ausreichender Anvulkanisationssicherheit durch den Einsatz von modifiziertem Kalifeldspat eine höhere Vulkanisationsgeschwindigkeit zu erzielen ist. Neben dem auch hier nachgewiesenen besseren Druckverformungsrest zeigt sich auch hinsichtlich der Thermostabilität ein deutlicher Vorteil durch den Feldspat-Einsatz.

## Patentansprüche

1. Mischungen, bestehend aus feinteiligem Feldspat und Organosiliciumverbindungen der allgemeinen Formel
[R¹ₙ(RO)₃₋ₙSi-(CH₂)_{z}]_{y} [B] (I), (I);
in der bedeuten:
B: -SCN (wenn y =1) oder -Sₓ- (wenn y =2)
R und R¹: eine Alkylgruppe mit 1 - 8 C-Atomen, verzweigt oder unverzweigt,
n: 0, 1 oder 2,
z: eine ganze Zahl von 1 bis 8
x: eine Zahl von 1 bis 8

2. Mischungen gemäß Anspruch 1,
**dadurch gekennzeichnet, daß** sie 0,1 bis 10 Gew.-Teile der Organosiliciumverbindung der Formel (I) enthalten.

3. Mischungen gemäß den Ansprüchen 1 oder 2,
**dadurch gekennzeichnet, daß** sie Kalifeldspat enthalten.

4. An der Oberfläche modifizierter feinteiliger Feldspat erhältlich durch Erwärmen der Mischungen gemäß den Ansprüchen 1 bis 3 auf 80 bis 160 ° C.

5. Mit Schwefel und Vulkanisationsbeschleunigern vernetzbare Kautschukmischungen, **dadurch gekennzeichnet, daß** sie Mischungen gemäß den Ansprüchen 1 bis 3 (jeweils Formel I) in einer Menge von 10 bis 300 Gew.-Teilen, bezogen auf 100 Teile Kautschuk enthalten.

6. Mit Schwefel und Vulkanisationsbeschleunigern vernetzbare Kautschukmischungen, **dadurch gekennzeichnet, daß** sie den modifizierten Feldspat gemäß Anspruch 4 (Formel I) in einer Menge von 10 bis 300 Gew.-Teilen, bezogen auf 100 Teile Kautschuk enthalten.

7. Kautschukmischungen gemäß den Ansprüchen 5 bis 6,
**dadurch gekennzeichnet, daß** sie einen weiteren natürlichen und/oder gefällten Füllstoff, gegebenenfalls zusammen mit einer oder mehreren der Verbindungen gemäß der Formel (I) enthalten.

8. Vulkanisate, hergestellt durch Vulkanisieren der Kautschukmischungen gemäß den Ansprüchen 5 bis 7.

## Claims

1. Mixtures comprising finely particulate feldspar and organosilicon compounds corresponding to the general formula
[R¹ₙ(RO)₃₋ₙ Si-(CH₂)_{z}]_{y} [B] (I)
in which:
B denotes -SCN (when y = 1) or -Sₓ- (when y = 2),
R and R¹ denote a branched or unbranched alkyl group having 1 to 8 C atoms,
n denotes 0, 1 or 2,
z denotes an integer from 1 to 8,
x denotes a number from 1 to 8.

2. Mixtures according to Claim 1,
**characterised in that** they contain from 0.1 to 10 parts by weight of the organosilicon compound corresponding to the formula (I).

3. Mixtures according to Claims 1 or 2,
**characterised in that** they contain potash feldspar.

4. Surface-modified finely particulate feldspar obtainable by heating the mixtures according to Claims 1 to 3 to from 80 to 160°C.

5. Rubber mixtures which are crosslinkable with sulfur and vulcanising accelerators,
**characterised in that** they contain mixtures according to Claims 1 to 3 (in each case formula I) in a quantity of from 10 to 300 parts by weight, in relation to 100 parts rubber.

6. Rubber mixtures which are crosslinkable with sulfur and vulcanising accelerators,
**characterised in that** they contain the modified feldspar according to Claim 4 (formula I) in a quantity of from 10 to 300 parts by weight, in relation to 100 parts rubber.

7. Rubber mixtures according to Claims 5 to 6,
**characterised in that** they contain a further natural and/or precipitated filler, optionally together with one or more of the compounds according to the formula (I).

8. Vulcanisates prepared by vulcanising the rubber mixtures according to Claims 5 to 7.

## Revendications

1. Mélanges constitués de feldspath finement divisé et de composés organosiliciés de formule générale
[R¹ₙ(RO)₃₋ₙSi-(CH₂)_{z}]_{y} [B] (I)
dans laquelle
B représente -SCN (lorsque y = 1) ou -Sₓ- (lorsque y = 2),
R et R¹ représentent un groupe alkyle ayant de 1 à 8 atomes de carbone, ramifié ou non ramifié,
n représente 0, 1 ou 2,
z représente un nombre entier allant de 1 à 8,
x représente un nombre allant de 1 à 8.

2. Mélanges selon la revendication 1,
**caractérisés en ce qu'**
ils contiennent de 0, 1 à 10 parties en poids du composé organosilicié de formule (I).

3. Mélanges selon la revendication 1 ou 2,
**caractérisés en ce qu'**
ils contiennent du feldspath potassique.

4. Feldspath finement divisé modifié à la surface, pouvant être obtenu par chauffage à 80-160'C des mélanges selon les revendications 1 à 3.

5. Compositions de caoutchouc réticulables avec du soufre et des accélérateurs de vulcanisation,
**caractérisées en ce qu'**
elles contiennent des mélanges selon les revendications 1 à 3 (chacun de formule I) en une quantité de 10 à 300 parties en poids, pour 100 parties de caoutchouc.

6. Compositions de caoutchouc réticulables avec du soufre et des accélérateurs de vulcanisation,
**caractérisées en ce qu'**
elles contiennent le feldspath modifié selon la revendication 4 (formule I) en une quantité de 10 à 300 parties en poids, pour 100 parties de caoutchouc.

7. Compositions de caoutchouc selon les revendications 5 et 6,
**caractérisées en ce qu'**
elles contiennent une autre charge naturelle et/ou précipitée, éventuellement conjointement avec un ou plusieurs des composés de formule (I).

8. Vulcanisats produits par vulcanisation des compositions de caoutchouc selon les revendications 5 à 7.
